# EUROPEAN PATENT SPECIFICATION

(11) **EP 2 580 123 B1**
(45) Date of publication and mention of the grant of the patent: **25.05.2016**
(21) Application number: 11724001.0
(22) Date of filing: 26.05.2011
(51) Int. Cl.: B64D 45/00

(54) **FLIGHT RECORDER**
FLUGSCHREIBER
ENREGISTREUR DE VOL

(30) Priority: 08.06.2010 GB 201009595
(43) Date of publication of application: 17.04.2013
(73) Proprietor: Penny & Giles Aerospace Limited, Christchurch Dorset BH23 3TH (GB)
(72) Inventor: KIDD, Nicholas, New Milton Hampshire (GB); CHAMBERLAIN, Paul, Ferndown Dorset BH22 9EL (GB)
(74) Representative: Somervell, Thomas Richard
(86) International application number: PCT/GB2011/000794
(87) International publication number: WO 2011/154684

(56) References cited:
- EP-A1- 1 419 964
- WO-A2-01/60693
- US-A1- 2009 267 799
- US-B2- 6 898 492

## Description

This application relates to aviation flight recorders and in particular to aviation flight recorders for light aircraft.

Aviation cockpit voice and flight data recorders (sometimes called 'black box' recorders or flight recorders) are used to gather and retain pertinent information about the operation and status of aircraft during a flight. This information becomes a crucial component in case of an unexpected event or accident involving the aircraft.

Flight recorders are required, by international regulations, to be carried on certain aircraft, typically large or passenger carrying aircraft and are made to conform to international standards relating to protection from crash damage and fire; however other aircraft not currently covered by these international regulations, typically light aircraft, are not currently mandated to carry and use them. It is possible that regulations requiring flight recorders for light aircraft may be introduced in the near future.

Typically, the flight recorders used in large commercial aircraft continually monitor the current condition of the aircraft via a large number of cables and sensors located around the aircraft. Data signals from these sensors are fed into a flight data acquisition unit (FDAU) which sends the data to the flight data recorder. Typical examples of information sent to be stored on the flight data recorder include position, speed, altitude, engine speed and rudder position; however modern flight data recorders can track and store several hundred parameters.

Sound recordings of the pilot and co-pilot's voices, as well as from other microphones in the cockpit area are also recorded and may be sent to a separate second flight recorder, often called a Cockpit Voice Recorder (CVR) or to a combined Cockpit Voice and Flight Data Recorder (CVFDR).

The standards require that these flight recorders are designed to withstand very high temperatures, large impact forces and prolonged submersion in water, so as to survive the conditions that may arise either during or after a crash of a large aircraft.

The number of sensors and cabling and the size of the memory protection required make the use of conventional flight recorders in light aircraft impractical due to the large weight and bulk of the recorder. Conventional flight recorders are also expensive, partially due to their high durability.

EP 1,419,964 A1 discloses a method and system for acquiring and recording on-board video and voice data of an aircraft, whereby a sequence of images of a control panel of the aircraft is acquired by a video camera installed in a cockpit of the aircraft.

The preamble of claim 1 is based on this document. WO 01/60693 A2 is directed to a method for recording image data aboard an aircraft comprising the steps of providing at least one camera aboard the aircraft for collection of the image data, and writing the image data to a storage device when at least one of a predetermined set of conditions exists aboard the aircraft.

US 2009/267,799 A1 relates to an arrangement of a recorder for an aircraft comprising an acquisition module.

US6898492 describes a flight data recorder for use with a light aircraft. The flight recorder is disclosed with built-in sensors to remove the need for external sensors and extensive cabling throughout an aircraft, however as the number of sensors determines the size and bulk of the flight recorder, a compromise is necessary.

It is an aim of the current invention to provide an improved flight recorder more suited to use for light aircraft.

According to a first aspect of the present invention, there is provided a flight recorder for an aircraft with an instrument display panel for displaying aircraft status data to a pilot in accordance with claim 1. The flight recorder comprises one or more sensors that provide flight condition data of the aircraft, a camera unit that provides image data; a data storage unit storing the aircraft status data and image data from the camera; and a control unit that monitors the flight condition data supplied by the sensors.

The flight recorder is mountable within a cockpit area of the aircraft to allow the camera unit to generate an image or a series of images of an instrument display panel and any aircraft status data displayed thereupon. Additionally, the flight recorder may be configured to dynamically change the resolution and/or the rate at which the sensor data are read and recorded, and/or at which the image or series of images are generated. The flight recorder is configured to alter the resolution and/or the rate at which the sensor data are read and recorded, and/or at which the images or series of images are generated, when the control unit detects a change to one or more of the flight condition data obtained by the sensors. This may be an absolute change, or may be subject to a threshold value or range. Typically, the resolution of the sensor data or generated images or series of images is altered from a lower resolution to a higher resolution. Similarly, the rate of the sensor data or generated images or series of images is altered from a lower rate to a higher rate.

The sensor data may be provided as digital data having a resolution determined by a number of bits of a digital format of the sensor data. In this regard the digital format may be one to which the sensor data is converted in an analogue-to-digital converter. For example, the sensor data may be converted to, say, an 8-bit digital signal for low resolution and to a 24-bit digital signal for high resolution.

It may be appreciated that the sensors of the flight recorder may include audio sensors. In this instance, the flight conditions monitored by the sensors may include cockpit sounds and/or voices. Alternatively, or additionally the sensors may comprise one or more audio-input sensors configured to monitor the audio stream from the headset or headsets of the cockpit crew. The audio data from the audio sensors and/or the audio-input sensors may be recorded by the data storage unit.

The data storage unit may comprise multiple storage devices, wherein data elements or groups of data elements comprising sensor data or image data are partitioned and stored in different storage devices. Each storage device may contain a complete and continuous record of the stored sensor, audio and image data but at a slower recorded rate than is contained within all the storage devices combined.

According to another aspect of the invention, there is provided a method of recording aircraft flight data in accordance with claim 7.

The method may include dynamically altering the resolution and/or the rate at which the sensor data are read and recorded. The resolution and/or the rate at which the sensor data are recorded may be altered when the control unit detects a change to one or more of the flight condition data obtained by the sensors. This may be an absolute change, or may be subject to a threshold value or range. Typically, the resolution of the sensor data is altered from a lower resolution to a higher resolution.

The images or series of images generated by the camera may form an interspersed series of different resolution images. For example, several high resolution images may be formed a second, with additional lower resolution images interspersed either thereafter or in-between the higher resolution images. The method may further comprise interlacing the image data to form an image of higher resolution from two or more lower resolution images.

By dynamically altering the resolution or rate at which sensor data and images are generated, the amount of storage or memory used to store the information is reduced and the system processing power required is reduced, allowing the use of smaller flight recorders more suited to use on a light aircraft. Additionally, critical data useful for the analysis of an incident or accident will be available at a higher rate or resolution at the time when the data is likely to be changing most rapidly. This dynamic change in resolution and/or rate may, for example, involve an increase in resolution or rate triggered by a detection of rapidly changing conditions, or "out of normal" conditions, and would typically occur for a short duration or until "normal" conditions return. Normal and out of normal conditions may be pre-defined, for example by set thresholds or limits to sensed conditions or rates of change of sensed conditions.

Additionally, cockpit audio such as voice or general noise may be recorded by means of an audio sensor. This audio sensor can be provided within the flight recorder unit as an integrated cockpit area microphone. This provides several advantages such as reduced complexity and reduced cost of installation. In addition the audio sensor may detect the headset audio stream from the pilot or other occupant and air traffic control radio communication using an input of the external audio. This audio data may then be stored by the flight recorder unit.

The data storage unit may comprise multiple storage devices, the method further comprising partitioning sensor data and/or image data into data elements or groups of data elements and storing the data elements or groups in different storage devices. The method may comprise storing a complete and continuous record of the stored sensor, audio and image data in each storage device but at a slower recorded rate than is contained in the data stored in all the storage devices combined.

The invention will now be described by way of example with reference to the accompanying drawings, in which like reference numerals designate like elements:
Figure 1 is a schematic of a flight recorder in accordance with an embodiment of the present invention.
Figure 2 illustrates an aircraft with a possible location for the flight recorder shown.
Figure 3 is an illustration of an aircraft cockpit area as may be generated by a camera unit within a flight recorder embodiment.
Figure 4 is a flow chart illustrating a decision sequence that may be performed by the control unit, of a flight recorder embodiment.

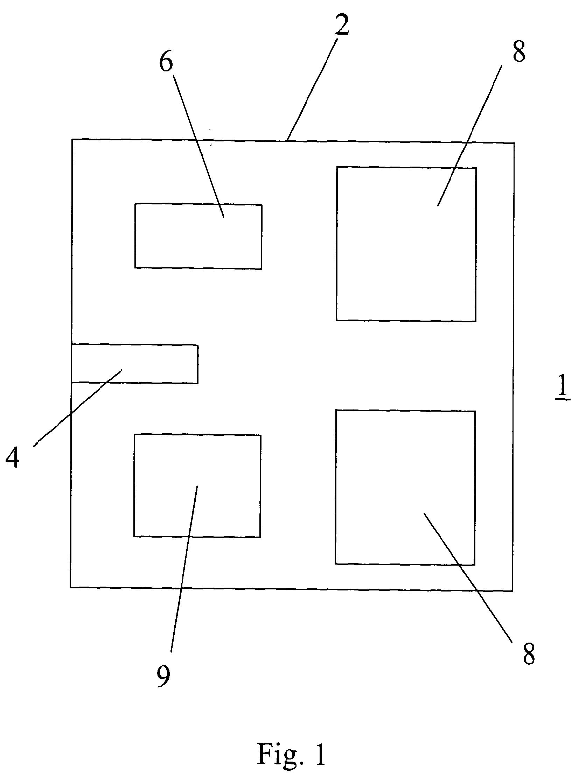

In figure 1, a flight recorder 1 comprises a case 2 for housing a number of internal components. The case 2 provides stability for the components and is preferably configured to withstand impacts, fire, crush and submersion in fluid which may occur as a result of an unexpected event involving an aircraft. Typically, insulation is provided within the case to protect the components from fire and impact damage. It may be appreciated that the level of protection provided by the insulation should be appropriate for the type of aircraft, taking into account the operating envelope of a smaller aircraft i.e. slower speed, carrying less fuel when compared to larger, commercial aircraft. The flight recorder 1 contains a camera unit 4 that is configured to obtain digital images or series of images. Advantageously, the camera unit 4 is able to dynamically adjust the resolution of obtained images or series of images according to instructions from a control unit 6.

The control unit 6 is configured to obtain flight condition data from one or more sensors 8 located within the case 2 of the flight recorder 1. These sensors 8 provide details of flight conditions, for example the altitude, speed, pitch, roll or yaw of the aircraft, and may therefore take the form of gyroscopic, acceleration, compass and cabin pressure sensors, although it will be appreciated that any flight condition and associated sensor may be incorporated into the device. Although it is preferred for the sensors to be located in the same flight recorder unit, sensor data could also be provided by way of an external data link from sensors elsewhere on the aircraft. Typically parameters such as speed, elevation/altitude and position would be provided by means of an integrated GPS unit. The sensors 8 may also be configured to detect audio, for example cockpit voices or noises, or may be able to receive audio from an external headset, microphone or air traffic control radio, for example from a headset worn by the pilot. Information recorded by the control unit 6 and the camera unit 4 is stored in a memory or a storage unit 9. This data may be stored in a compressed format in accordance with known protocols (for example JPG and MPEG compression for images, MP3 or WAV for audio).

Many of the components shown in Figure 1 may be mounted outside of any fire or mechanical protection. It is the memory or storage unit 9 which needs to be recovered after a crash or an unexpected event involving an aircraft, and which it is most important to protect from fire and impact damage etc. Therefore the memory or storage unit 9 alone, may be encased locally inside case 2 with insulation and mechanical protection provided to protect the memory components.

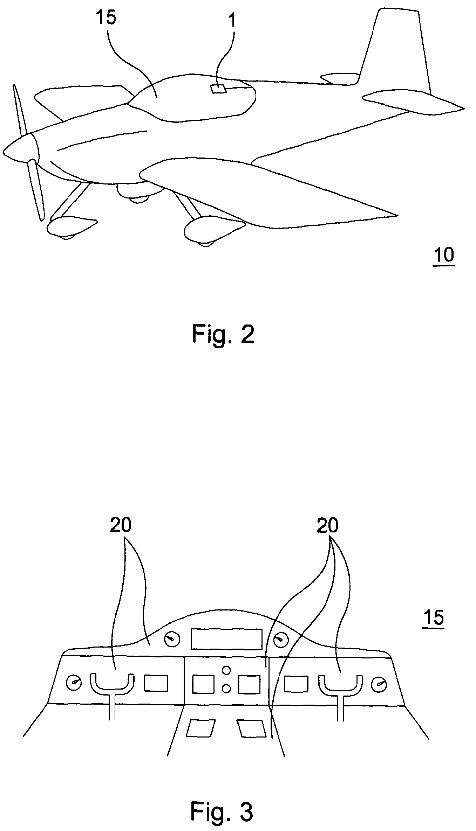

Figure 2 illustrates an aircraft 10 with a cockpit area 15. The flight recorder 1 is shown located within the cockpit area 15 and is positioned facing towards an instrument display panel 20 (see figure 3). It is an advantage of the current invention that the flight recorder 1 is lighter and of less bulk than conventional flight recorders, allowing it to be located in a greater variety of positions within the aircraft. The positioning of the flight recorder 1 is preferably located to allow a clear unobstructed image of the instrument display panel 20 for the camera unit 4.

Figure 3 illustrates the interior of aircraft cockpit area 15. The cockpit area 15 includes one or more instrument display panels 20. The display panels 20 display aircraft status data to a pilot (not shown). The aircraft status data may include, for example, information relating to the altitude, aircraft speed, wind speed and position of the aircraft as well as information such as fuel level, engine temperature etc. that is relayed to the instrument display panels 20 by an array of detectors (not shown) located around the aircraft. When the flight recorder 1 is located within the cockpit area 15 and is positioned facing towards the instrument display panels 20, the camera unit 4 obtains an image or a series of images of the instrument display panels 20, which are then stored in the data storage unit 9.

It will be appreciated that the complexity, design and number of instrument display panels 20 may vary depending upon the type of aircraft used. It will also be appreciated that the number of detectors located around the aircraft and the amount of information supplied to the instrument display panels 20 are also dependent upon the individual aircraft. However, by suitable positioning, the camera unit 4 in the flight recorder 1 can capture and store images of the instrument display panels 20 without the need for separate sensor data being fed to the flight recorder 1, thus reducing the installation cost and weight in terms of external sensors and cable routing.

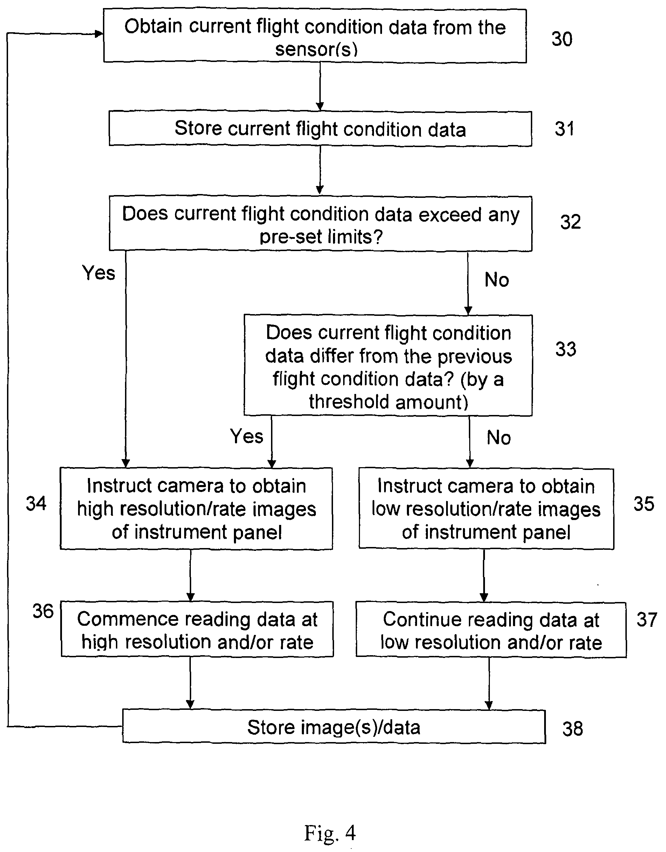

Figure 4 shows a flowchart detailing a decision sequence that may be performed by the control unit 6. Initially, the flight recorder 1 is located within the cockpit area 15 of the aircraft 10, preferably in a position such as that shown in figure 2. During a flight and at step 30, the control unit 6 obtains one or more current flight condition data from the sensors 8. The sensor data is typically obtained via an analogue to digital converter, which provides the current data in a low resolution, for example 8-bit, digital data format. The control unit 6 then stores this current flight condition data either in the data storage unit 9 or in another form of memory, for example RAM (step 31). At this stage, while conditions are normal, the current flight data is stored at a low rate or frequency. Also, while the flight conditions are normal, the camera unit 4 may be configured to generate image data of the cockpit instrument display panel 20 at a low resolution and/or a low rate so that these image data are recorded. Typically a high resolution image will be captured every second, interspersed with lower resolution images. In this instance, during the absence of a significant change in flight conditions, the higher resolution images may be generated at a lower rate and interspersed with the lower resolution images. An implementation of this method may be to capture one or more high resolution images, followed by a number of lower resolution images every second. Subsequently, also it will be possible to interlace lower resolution images to create a higher resolution image. For example, the lower resolution images are combined to form a higher resolution image in a technique analogous to that used in cathode ray televisions.

At step 32, the flight recorder control unit 6, determines if the current flight condition data exceeds any pre-set thresholds that would cause the conditions to be considered "out of normal". If none of the pre-set thresholds are exceeded, then at step 33, the control unit 6 compares one or more of the flight conditions data obtained from the sensors 8 with -previously stored flight conditions data and determines if the flight conditions have altered significantly. The control unit 6 determines the degree of difference between the current flight conditions and the stored conditions.

If, at step 33, the control unit 6 determines that the stored flight conditions and the current flight conditions do not differ by a significant amount (for example by more than a predetermined threshold value) then the control unit instructs the camera unit 4 to continue obtaining images or a series of images of the instrument display panel 20 (step 35) at a low resolution/rate and at step 37 to continue reading the sensor data at a low rate and resolution.

Conversely, if the control unit 6 determines at step 32 that a pre-set threshold has been exceeded and current conditions are "out of normal", or at step 33 that the stored flight conditions and the current conditions do differ by a significant amount (e.g. by more than the threshold value), then at step 34 the control unit dynamically changes the resolution (and/or image capture rate) of the camera unit 4 so that it obtains an image or a series of images at a higher resolution and/or rate. At step 36 the control unit 6 dynamically increases the rate and resolution at which the sensor data is read. For example the sensor data may be obtained at a 24-bit digital data format.

In the procedure described above, the images and sensor data obtained are stored in the data storage unit 9 and provide a record of the flight status data. A timestamp of the image and sensor data is also stored. The advantage of this procedure is that the size (amount) of the data stored as images in the data storage unit 9 is reduced. During normal flight conditions, the images are obtained at a low resolution or rate, most of the time, to reduce the amount of data stored. When the control unit 6 detects a change in the flight conditions (for example caused by an unexpected flight event) as detected by the sensors 8, the sensor data and images obtained by the camera unit 4 of the instrument display panel 20 are of a sufficiently high resolution and rate to ensure that the aircraft status data displayed by the instrument display panels 20 are easily discernable within the images and any rapid changes can be observed and analysed. This eliminates the need to provide either a multitude of sensors 8 within the flight recorder 1 or heavy and bulky interface cabling between the external sensors on the aircraft and the flight recorder 1 and reducing the cost associated with the installation. It also means that the size of the data storage memory in the flight recorder 1 can be kept relatively small. This also has the advantage of reducing the time required to download the acquired data.

As the overall size of the flight recorder 1 is partially determined by the size of data storage memory required, the use of smaller data storage memory units 9 allow smaller flight recorders 1 to be manufactured, increasing the positional versatility of the flight recorder 1.

It will be appreciated that, although the camera unit 4 is configured to dynamically change the resolution and/or the rate of the obtained images when a change in the flight conditions occurs, the control means 6 may alternatively or additionally instruct the camera unit 4 to obtain alternating high and low resolution images or image rates, or may set the variance of the resolution and/or rate of the images in a predetermined manner.

In order to maximise the likelihood of successfully recovering the data, multiple storage devices can be used as part of the data storage unit 9. Subsequent data elements or groups of data elements (sensor data or images) can be partitioned so that they are stored in different physical storage devices. As such, each storage device contains a complete and continuous record of the stored sensor data, audio and images but is at a slower recorded/update rate than is contained within all the storage devices combined. After an incident or accident, recovery of the data from all storage devices will allow recovery of all data, but in the event that one or more storage devices are damaged, one or more other storage devices will still contain a complete record, albeit at a lower update rate, of the events leading to the incident.

## Claims

1. A flight recorder (1) for an aircraft (10) with an instrument display panel (20) for displaying aircraft status data to a pilot, said flight recorder (1) comprising:
one or more sensors (8) that provide flight condition data of the aircraft (10);
a camera unit (4) that provides image data;
a data storage unit (9) storing the aircraft flight condition data and image data from the camera (4); and
a control unit (6) that monitors the flight condition data supplied by the sensors (8);
wherein the flight recorder (1) is mountable within a cockpit area (15) of the aircraft (10) and the camera unit (4) is configured to generate an image or a series of images of the instrument display panel (20) and aircraft status data displayed thereupon; and
**characterized in that**
the flight recorder (1) is configured to obtain said sensor or image data at a low resolution or rate, to reduce the amount of data stored, and to alter the resolution and/or the rate in response to a change in the flight condition data, to obtain sensor data or image data at a higher resolution or rate.

2. A flight recorder (1) according to claim 1, configured to alter the resolution and/or the rate at which sensor data are read and recorded and/or at which the images or series of images are generated when the control unit (6) detects a change to one or more of the flight condition data obtained by the sensors (8) of greater than a threshold value or range.

3. A flight recorder (1) according to any preceding claim, wherein the sensor data is provided as digital data having a resolution determined by a number of bits of the digital format of the sensor data.

4. A flight recorder (1) according to any preceding claim, further comprising an audio sensor for monitoring cockpit noise and/or an audio-input sensor for monitoring the audio stream from a headset,
wherein the data storage unit (9) stores the cockpit noise from the audio sensor and the headset audio stream from the audio-input sensor.

5. A flight recorder according to any preceding claim wherein the data storage unit comprises multiple storage devices, wherein data elements or groups of data elements comprising sensor data or image data are partitioned and stored in different storage devices.

6. A flight recorder according to claim 5, wherein each storage device contains a complete and continuous record of the stored sensor, audio and image data but at a slower recorded rate than is contained within all the storage devices combined.

7. A method of recording aircraft flight data comprising the steps of:
providing a flight recorder unit (1), wherein the flight recorder unit (1) contains a camera (4) and a data storage unit (9) for recording image data generated by the camera unit (4);
locating the flight recorder unit (1) within a cockpit area (15) of an aircraft (10);
using the camera (4) to generate an image or series of images of an instrument display panel (20) and aircraft status data displayed thereupon;
monitoring a flight condition of an aircraft (10) from one or more sensors (8) in the flight recorder (1);
detecting a change to one or more of the flight condition data; and
generating a lower resolution and/or rate of an image or series of images in the absence of a change to the one or more flight condition data , to reduce the amount of data stored, and generating a higher resolution and/or rate of an image or series of images when a change to the one or more flight condition data obtained by the sensors (8) is detected.

8. The method according to claim 7, further comprising the step of:
dynamically altering the resolution of the generated image or series of images and/or dynamically altering the rate at which images are generated.

9. The method according to claim 7 or claim 8, including dynamically altering the resolution and/or the rate at which the sensor data are read and recorded when a change to one or more of the flight condition data obtained by the sensors is detected.

10. The method according to any one of claims 7 to 9, further comprising a step of interspersing series of different resolution images and/or a step of interlacing the image data.

11. The method according to any one of claims 7 to 10, further comprising recording cockpit audio or noise by means of an audio sensor.

12. The method according to any of claims 7 to 11, wherein the data storage unit (9) comprises multiple storage devices, the method further comprising partitioning sensor data and/or image data into data elements or groups of data elements and storing the data elements or groups in different storage devices.

13. The method of claim 12, comprising storing a complete and continuous record of the stored sensor, audio and image data in each storage device but at a slower recorded rate than is contained in the data stored in all the storage devices combined.

14. The flight recorder (1) according to any of claims 1 to 6 or the method according to any of claims 7 to 13, wherein the sensor data is received by way of an external data link from sensors elsewhere on the aircraft (10).

## Patentansprüche

1. Flugschreiber (1) für ein Flugzeug (10) mit einem Bordinstrument-Anzeigefeld (20) zum Anzeigen von Flugzeugstatusdaten für einen Piloten, wobei der Flugschreiber (1) umfasst:
einen oder mehrere Sensoren (8), welche Flugzustandsdaten des Flugzeugs (10) bereitstellen;
eine Kameraeinheit (4), welche Bilddaten bereitstellt;
eine Datenspeichereinheit (9), welche die Flugzustandsdaten des Flugzeugs und von der Kamera (4) bereitgestellte Bilddaten speichert; und
eine Steuereinheit (6), welche die von den Sensoren (8) gelieferten Flugzustandsdaten überwacht;
wobei der Flugschreiber (1) innerhalb eines Cockpitbereichs (15) des Flugzeugs (10) befestigt werden kann und die Kameraeinheit (4) zum Erzeugen eines Bilds oder einer Serie von Bildern des Bordinstrument-Anzeigefelds (20) und der darauf angezeigten Flugzeugstatusdaten konfiguriert ist; und
**dadurch gekennzeichnet dass**
der Flugschreiber (1) zum Erfassen der Sensordaten oder der Bilddaten mit einer niedrigen Bildauflösung oder Rate konfiguriert ist, um die Menge an gespeicherten Daten zu reduzieren, und zum Verändern der Auflösung und/oder der Rate, als Reaktion auf eine Änderung in den Flugzustandsdaten, um Sensordaten oder Bilddaten mit einer höheren Auflösung oder Rate zu erhalten.

2. Flugschreiber (1) nach Anspruch 1, welcher zum Ändern der Auflösung und/oder der Rate, mit der Sensordaten gelesen und aufgezeichnet werden und/oder mit der die Bilder oder die Bildserien erzeugt werden, konfiguriert ist, wenn die Steuereinheit (6) eine Änderung in einem oder mehreren der durch die Sensoren (8) erhaltenen Flugzustandsdaten erfasst, welche größer als ein Schwellwert oder Schwellbereich ist.

3. Flugschreiber (1) nach einem der vorhergehenden Ansprüche, wobei die Sensordaten als digitale Daten bereitgestellt werden, welche eine Auflösung aufweisen, die durch eine Anzahl an Bits des digitalen Formats der Sensordaten bestimmt wird.

4. Flugschreiber (1) nach einem der vorhergehenden Ansprüche, ferner umfassend einen Audiosensor zum Überwachen der Cockpitgeräusche und/oder einen Audio-Eingangssensor zum Überwachen des Audiostroms aus einem Kopfhörer,
wobei die Datenspeichereinheit (9) die Cockpitgeräusche vom Audiosensor und den Kopfhöreraudiostrom vom Audio-Eingangssensor speichert.

5. Flugschreiber nach einem der vorhergehenden Ansprüche, wobei die Datenspeichereinheit mehrere Speichervorrichtungen umfasst, wobei Datenelemente oder Gruppen von Datenelementen, welche Sensordaten oder Bilddaten umfassen, in unterschiedlichen Speichervorrichtungen verteilt und gespeichert werden.

6. Flugschreiber nach Anspruch 5, wobei jede Speichervorrichtung eine vollständige und kontinuierliche Aufzeichnung der gespeicherten Sensor-, Audio-, und Bilddaten enthält, jedoch mit einer langsameren Aufzeichnungsrate als das, was in allen kombinierten Speichervorrichtungen enthalten ist.

7. Verfahren zum Aufzeichnen von Flugdaten eines Flugzeugs, umfassend die Schritte:
Bereitstellen einer Flugschreibereinheit (1), wobei die Flugschreibereinheit (1) eine Kamera (4) und eine Speichereinheit (9) zum Aufzeichnen von Bilddaten umfasst, welche von der Kameraeinheit (4) erzeugt wurden;
Anordnen der Flugschreibereinheit (1) innerhalb eines Cockpitbereichs (15) eines Flugzeugs (10);
Verwenden der Kamera (4) zum Erzeugen eines Bilds oder einer Serie von Bildern eines Bordinstrument-Anzeigefelds (20) und auf demselben angezeigten Flugzeugstatusdaten;
Überwachen eines Flugzustandes eines Flugzeuges (10) von einem oder mehreren Sensoren (8) im Flugschreiber (1);
Erfassen einer Änderung einer oder mehrerer der Flugzustandsdaten; und
Erzeugen einer niedrigeren Auflösung und/oder Rate eines Bilds oder einer Serie von Bildern in Abwesenheit von Veränderungen der einen oder mehreren Flugzustandsdaten, um die Menge der gespeicherten Daten zu reduzieren, und das Erzeugen einer höheren Auflösung und/oder Rate eines Bilds oder einer Serie von Bildern, wenn eine Änderung der einen oder mehreren von den Sensoren (8) erhaltenen Flugzustandsdaten erfasst wird.

8. Verfahren nach Anspruch 7, ferner umfassend den Schritt:
dynamische Änderung der Auflösung des erzeugten Bilds oder der erzeugten Bildserie und/oder dynamische Änderung der Rate, mit der die Bilder erzeugt werden.

9. Verfahren nach Anspruch 7 oder 8, umfassend die dynamische Änderung der Auflösung und/oder Rate, mit der die Sensordaten gelesen und aufgezeichnet werden, wenn eine Änderung einer oder mehrerer der von den Sensoren erhaltenen Flugzustandsdaten erfasst wird.

10. Verfahren nach einem der Ansprüche 7 bis 9, ferner umfassend einen Schritt des Verteilens von Serien von Bildern mit unterschiedlichen Auflösungen und/oder einen Schritt des Verschachtelns der Bilddaten.

11. Verfahren nach einem der Ansprüche 7 bis 10, ferner umfassend das Aufzeichnen von Cockpitaudio oder -geräuschen mittels eines Audiosensors.

12. Verfahren nach einem der Ansprüche 7 bis 11, wobei die Datenspeichereinheit (9) mehrere Speichervorrichtungen umfasst, wobei das Verfahren ferner das Aufteilen der Sensordaten und/oder Bilddaten in Datenelemente oder -gruppen von Datenelementen und das Speichern der Datenelemente oder -gruppen in unterschiedlichen Speichervorrichtungen umfasst.

13. Verfahren nach Anspruch 12, umfassend das Speichern einer vollständigen und kontinuierlichen Aufzeichnung der gespeicherten Sensor-, Audio-, und Bilddaten in jeder Speichervorrichtung, jedoch mit einer niedrigeren Aufzeichnungsrate als das, was in den in allen kombinierten Speichervorrichtungen gespeicherten Daten enthalten ist.

14. Flugschreiber (1) nach einem der Ansprüche 1 bis 6 oder Verfahren nach einem der Ansprüche 7 bis 13, wobei die Sensordaten über eine externe Datenverbindung von Sensoren empfangen werden, welche an anderen Stellen auf dem Flugzeug (10) angeordnet sind.

## Revendications

1. Enregistreur de vol (1) pour un aéronef (10) doté d'un tableau de bord (20) permettant d'afficher des données d'état de l'aéronef à l'attention d'un pilote, ledit enregistreur de vol (1) comprenant :
un ou plusieurs capteurs (8) fournissant des données relatives aux conditions de vol de l'aéronef (10) ;
une unité de caméra (4) fournissant des données sous forme d'images ;
une unité de stockage de données (9) stockant les données relatives aux conditions de vol de l'aéronef et les données sous forme d'images issues de la caméra (4) ; et
une unité de contrôle (6) qui surveille les données relatives aux conditions de vol fournies par les capteurs (8) ;
dans lequel l'enregistreur de vol (1) est apte à être installé dans un poste de pilotage (15) de l'aéronef (10), et l'unité de caméra (4) est configurée pour générer une image ou une série d'images du tableau de bord (20) et des données d'état de l'aéronef qui y sont affichées ; et
**caractérisé en ce que**
l'enregistreur de vol (1) est configuré pour obtenir lesdites données des capteurs ou données sous forme d'images à une résolution ou rythme bas, afin de réduire la quantité de données stockées, et pour modifier la résolution et/ou le rythme en réaction à une modification des données relatives aux conditions de vol, afin d'obtenir les données issues des capteurs ou les données sous forme d'images à une résolution ou à un rythme supérieurs.

2. Enregistreur de vol (1) selon la revendication 1, configuré pour modifier la résolution et/ou le rythme auxquels les données issues des capteurs sont lues et enregistrées et/ou auxquels les images ou séries d'images sont générées lorsque l'unité de contrôle (6) détecte un changement chez une ou plusieurs des données relatives aux conditions de vol obtenues par les capteurs (8) supérieur à une valeur ou plage seuil.

3. Enregistreur de vol (1) selon l'une quelconque des revendications précédentes, dans lequel les données issues des capteurs sont fournies sous la forme de données numériques dont la résolution est déterminée par un nombre de bits du format numérique des données issues des capteurs.

4. Enregistreur de vol (1) selon l'une quelconque des revendications précédentes comprenant en outre un capteur audio pour surveiller les bruits du poste de pilotage et/ou un capteur d'entrée audio pour surveiller le flux audio provenant d'un casque d'écoute,
dans lequel l'unité de stockage de données (9) stocke les bruits du poste de pilotage issus du capteur audio et le flux audio du casque d'écoute en provenance du capteur d'entrée audio.

5. Enregistreur de vol selon l'une quelconque des revendications précédentes, dans lequel l'unité de stockage de données comprend de multiples dispositifs de stockage, des éléments de données ou groupes d'éléments de données comprenant des données issues des capteurs ou des données sous forme d'images étant segmentées et stockées dans différents dispositifs de stockage.

6. Enregistreur de vol selon la revendication 5, dans lequel chacun des dispositifs de stockage contient un enregistrement complet et continu des données issues des capteurs, données audio et données sous forme d'images ayant été stockées, mais à un rythme d'enregistrement plus lent que ce que contient l'ensemble des dispositifs de stockage combinés.

7. Procédé d'enregistrement de données de vol d'un aéronef, comprenant les étapes consistant à :
fournir une unité d'enregistreur de vol (1), cette unité d'enregistreur de vol (1) comprenant une caméra (4) et une unité de stockage de données (9) permettant d'enregistrer les données sous forme d'images générées par l'unité de caméra (4) ;
installer l'unité d'enregistreur de vol (1) dans le poste de pilotage (15) d'un aéronef (10) ;
exploiter la caméra (4) pour générer une image ou une série d'images d'un tableau de bord (20) et des données d'état de l'aéronef qui y sont affichées ;
surveiller une condition de vol de l'aéronef (10) émanant d'un ou plusieurs capteurs (8) dans l'enregistreur de vol (1) ;
détecter un changement chez une ou plusieurs des données relatives aux conditions de vol ; et
générer une moindre résolution et/ou un moindre rythme d'une image ou série d'images en l'absence de changement chez lesdites une ou plusieurs données relatives aux conditions de vol, afin de réduire la quantité de données stockées, et générer une résolution et/ou un rythme accrus d'une image ou d'une série d'images lorsqu'un changement est détecté chez lesdites une ou plusieurs données relatives aux conditions de vol obtenues par les capteurs (8).

8. Procédé selon la revendication 7, comprenant en outre l'étape consistant à :
modifier dynamiquement la résolution de l'image ou de la série d'images générées et/ou modifier dynamiquement le rythme auquel les images sont générées.

9. Procédé selon la revendication 7 ou la revendication 8, comportant une modification dynamique de la résolution et/ou du rythme auxquels les données issues des capteurs sont lues et enregistrées lorsqu'un changement est détecté chez une ou plusieurs des données relatives aux conditions de vol obtenues par les capteurs.

10. Procédé selon l'une quelconque des revendications 7 à 9, comprenant en outre une étape consistant à intercaler des séries d'images de résolutions différentes et/ou une étape consistant à entrelacer les données sous forme d'images.

11. Procédé selon l'une quelconque des revendications 7 à 10, comprenant en outre l'enregistrement des échanges audio ou des bruits du poste de pilotage au moyen d'un capteur audio.

12. Procédé selon l'une quelconque des revendications 7 à 11, dans lequel l'unité de stockage de données (9) comprend de multiples dispositifs de stockage, le procédé comprenant en outre la segmentation des données issues des capteurs et/ou des données sous forme d'images en des éléments de données ou groupes d'éléments de données et le stockage desdits éléments de données ou groupes dans différents dispositifs de stockage.

13. Procédé selon la revendication 12, comprenant le stockage, dans chacun des dispositifs de stockage, d'un enregistrement complet et continu des données issues des capteurs, données audio et données sous forme d'images ayant été stockées mais à un rythme d'enregistrement plus lent que ce que renferment les données stockées dans l'ensemble des dispositifs de stockage combinés.

14. Enregistreur de vol (1) selon l'une quelconque des revendications 1 à 6 ou procédé selon l'une quelconque des revendications 7 à 13, dans lequel les données issues des capteurs sont reçues au moyen d'une liaison de données externe provenant de capteurs situés ailleurs dans l'aéronef (10).
